# EUROPEAN PATENT APPLICATION

(11) **EP 0 566 928 A2**
(43) Date of publication of application: **27.10.1993**
(21) Application number: 93105734.3
(22) Date of filing: 07.04.1993
(51) Int. Cl.: H04Q 1/46

(54) **Tone detection method for telephone subset**

(30) Priority: 24.04.1992 AU 2088/92
(71) Applicant: ALCATEL AUSTRALIA LIMITED, Alexandria, Sydney 2015 (AU)
(72) Inventor: Crowe, Kevin Anthony, Bangor, 2234, N.S.W. (AU); Fox, Ronald Christopher Shaw, Randwick, 2031, N.S.W. (AU); Benham, Raymond Michael, East Hills, 2213, N.S.W. (AU); Leece, Phil, Oatley, 2223, N.S.W. (AU)
(74) Representative: Pohl, Herbert, Dipl.-Ing

(57) **Abstract**

A tone detection method for a telephone subset to detect tones in the presence of noise and speech. According to the method the period of an input signal containing the valid tone is measured at a fixed sample rate (say 10 ms). The measured periods are compared to that expected of a valid tone and a pass/fail decision is made for each sample and stored in a buffer whose length is chosen to be longer than a complete cadence cycle of the valid tone (say 1 second). By examining the buffer it is possible to calculate a percentage pass rate for any period. If the pass rate is above a predetermined threshold then a valid tone is present.

## Description

This invention relates to the detection of audible tones used in a telephone network, particularly, though not exclusively, audible tones used in exchange based facilities for subscribers such as, for example, "call-waiting" tone.

Telephone network tones are generally designed to be detected by the human ear, though it is often an advantage to be able to detect these tones electronically using a tone detector.

A tone detector must be able to, on the one hand, detect a valid tone in the presence of noise, speech or other tones, and on the other hand to reject other tones, speech and noise which may be similar to the valid tone.

A tone detector relies on the characteristics of amplitude, frequency, and cadence of the desired tone being known. By looking for one or more of these characteristics, it is possible to distinguish a particular tone from other tones, noise or speech. Often, the presence of noise or speech may mask one or more of the characteristics of the tone and prevent its detection. By looking for several characteristics simultaneously a more robust tone detector can be achieved than by looking for a single characteristic.

In one known detection method using a tone detector, the tones are separated from the noise and speech using filters and then compared with the resulting envelope of the extracted tone to the expected cadence.

A disadvantage of this method is that speech or noise may mask the tone and cause the incorrect cadence to be measured, resulting in a failure to detect a valid tone. Tones of short duration may not pass through a narrow filter and thus not be detected.

Another disadvantage is the circuitry required to filter the tone and measure the cadence.

Another known method commonly used is to use digital signal processing techniques. This method converts the signal to a stream of numbers which can be processed by computer. This method requires an analogue/digital converter and a fast computer to process the data in real time. Although this method gives good results the cost is high.

According to the invention there is provided a method of detecting a single known frequency having a predetermined cadence, said method comprising the steps of:
(a) Apply a signal including tone to be detected to a zero-crossing detector means;
(b) Measure with measuring means the period between sequential zero crossings detected in said zero-crossing detector;
(c) Compare in a comparator means the periods measured by measuring means with a predetermined range of values; if said period is within said predetermined range of values a first state is stored in a memory means, and if the period is not within the said predetermined range of values a second state is stored in said memory means;
(d) Analyse the contents of said memory means in a correlation means, wherein the contents are correlated with expected states of a valid cadence;
(e) Provide an indication that a valid tone has been received when correlation is greater than a predetermined threshold.

The basic principle of this method is to measure the period of the input signal at a fixed sample rate (say 10 ms). The measured periods are compared to that expected of a valid tone and a pass/fail decision is made for each sample. The pass/fail decision is stored in a buffer. The length of the buffer is chosen to be longer that a complete cadence cycle of the tone (say 1 second). By examining this buffer it is possible to calculate a percentage pass rate for any period. If this pass rate is above an arbitrary threshold then a valid tone is present.

The selection of the percentage pass rate allows for a certain level of corruption of the tone due to speech or noise and still give a valid detection. During periods of no tone (eg. in between tone bursts) the pass rate would approach 0%. In this way the cadence of the tone can be validated.

In order that the invention may be readily carried into effect, an embodiment thereof will now be described, in which:
Figure 1 is a schematic circuit of an arrangement to carry out the method of the invention;
Figure 2 is a waveform diagram of the input and output signals of the Schmitt trigger of Figure 1.
Figure 3 is a timing diagram relating to the method of the invention.

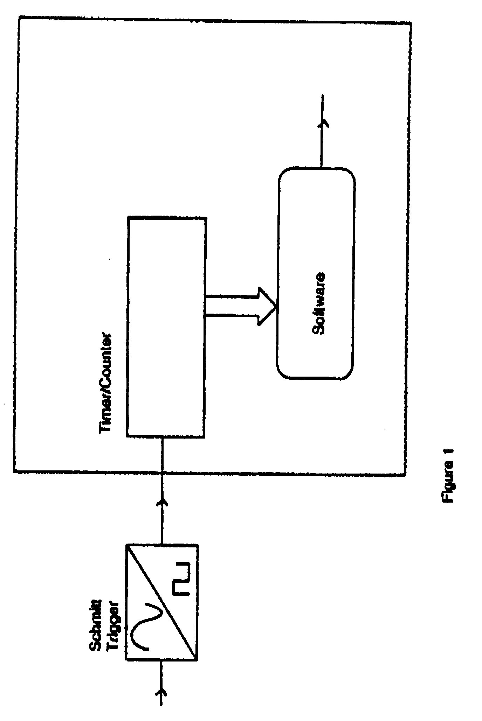

Referring to Figure 1, the hardware required to implement the method of the invention comprises a schmitt trigger, a counter, a computer and a clock. The counter and clock may be part of a microcontroller/computer,

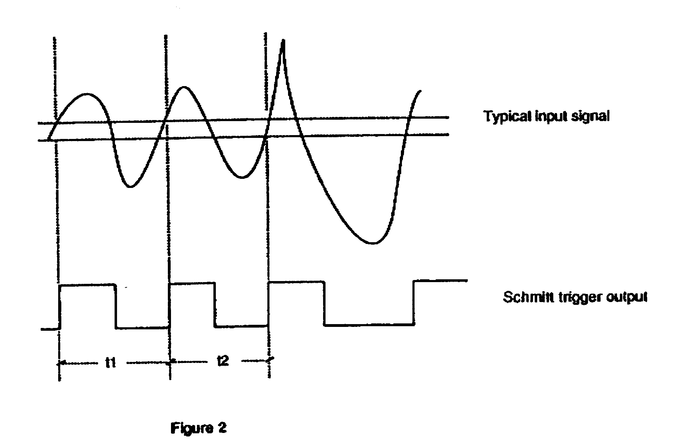

The Schmitt trigger is a device whose output can be in one of only two logic states - high or low (1 or 0). The input to the Schmitt trigger is an analog signal containing the tone to be detected together with speech, noise and possibly other tones. An input signal with an amplitude greater than the threshold of the Schmitt trigger will cause the output of the Schmitt trigger to change state every time the input signal changes polarity (zero crossing). See Figure 2.

The output of the Schmitt trigger is a logic signal with a period equal to the input signal. This is fed to the timer/counter input. The timer/counter is configured to measure the period of the logic signal, ie. t₁, t₂ of Figure 2.

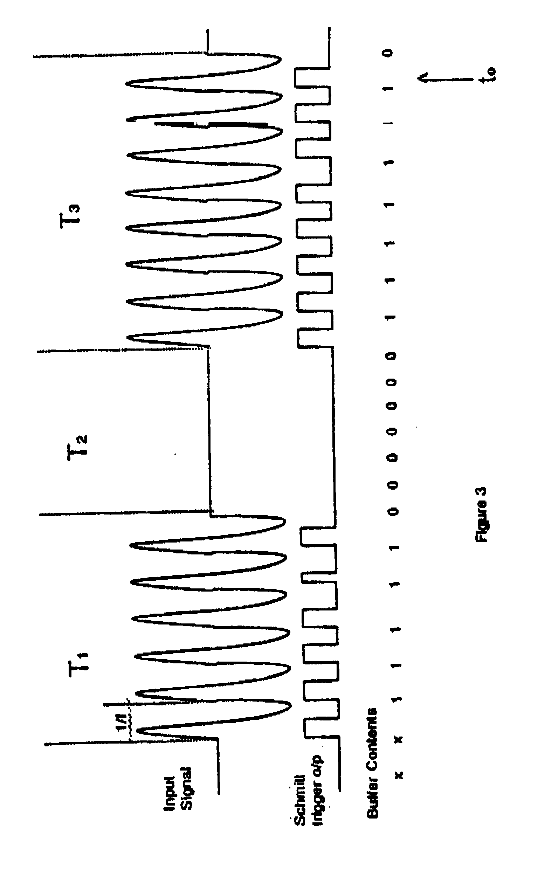

The software running in the microprocessor is programmed to perform several functions:
1) To control and read the output of the timer/counter at a regular rate. The value read from the timer/counter corresponds with the instantaneous period of the input signal.
2) Compare the period measured to a set of predefined limits for a valid tone to give a binary result. A binary '1' corresponde to the measured period being within limits (ie. a valid tone), a '0' corresponds to a measured period outside of the predefined limits.
3) The above binary result is stored into a butter containing the binary results of previous measurements. The buffer thus contains a history of the input signal.
4) The software then analyses the contents of the buffer to determine the cadence of the tone. Figure 3 shows an example of a tone with a frequency of f and a cadence of T₁ on, T₂ off, T₃ on.

As shown in Figure 3, a valid tone produces 5 off '1's during T₁, 7 off '0's during T₂ and 7 off '1's during T₃. When the buffer contains this pattern then a valid tone has been received. The action taken by the software upon detection of a valid tone is dependent on the application.

Every time a '1' or '0' is stored into the buffer, the software 'looks back' through the buffer for the tell tale pattern. It can be seen from Figure 3 that this occurs only at time t₀.

Although a valid tone would be detected, any corruption of the tone due to noise or speech would cause the pattern of '1's and '0's in the buffer to be different to that expected. Thus the above could only be used to detect the 'perfect' tone. It is preferable, however, to allow for a number of errors to occur in the buffer before rejecting the tone. The number of allowable errors would be a predetermined value which is selected to give adequate detection of valid tones in the presence of noise while still rejecting unwanted tones. In the above example, this could be done by looking for 4 or more '1's in T₁, 6 or more '0's in T₂ and 6 or more '1's in T₃. Thus 1 error in each phase is allowable. A total of 4 or more errors would cause the tone to be rejected.

In a preferred method every zone-crossing pair is not measured. For example, a 425 Hz tone with a cadence of 200 ms on, 200 ms off, 200 ms on can be satisfactorily detected by sampling the period every 10ms. This reduces the processing requirements of the processor.

In another preferred method the period is measured twice at every sample point. Both measurements must be valid before a '1' is stored into the buffer. This improves noise rejection.

The present invention has been described with regard to many particulars though it will be understood that equivalents may be readily substituted without departing from the scope of the invention.

## Claims

1. A method of detecting a single known frequency having a predetermined cadence, said method comprising the steps of:
(a) Apply a signal including tone to be detected to a zero-crossing detector means;
(b) Measure with measuring means the period between sequential zero crossings detected in said zero-crossing detector;
(c) Compare in a comparator means the periods measured by measuring means with a predetermined range of values; if said period is within said predetermined range of values a first state is stored in a memory means, and if the period is not within the said predetermined range of values a second state is stored in said memory means;
(d) Analyse the contents of said memory means in a correlation means, wherein the contents are correlated with expected states of a valid cadence;
(e) Provide an indication that a valid tone has been received when correlation is greater than a predetermined threshold.

2. A method as claimed in claim 1, wherein said memory means has a capacity sufficient to contain one complete cadence.

3. A method as claimed in claim 1 or 2, wherein said signal includes speech signals and/or noise signals.

4. A method as claimed in any one of claims 1 to 3, wherein the period between two sequential zero crossings is measured periodically at a predetermined rate.

5. A method as claimed in any one of claims 1 to 3, wherein the period between two sequential zero crossings is measured at least twice periodically at a predetermined rate.

6. A tone detector arrangement for carrying out the method as claimed in any one of the previous claims, said arrangement comprising a zero-crossing detector means having a signal input means, a measuring means for measuring the period between zero crossings detected in said zero crossing detector means, comparator means for comparing periods measured with a predetermined range of values whereby if said period is within said predetermined range of values a first state is stored in a memory means, and if the period is not within said predetermined range of values a second state is stored in said memory means, a correlation means wherein said memory's contents are correlated with expected states of said predetermined cadence, and indication being provided that a valid tone has been received when correlation is greater than a predetermined threshold.

7. A tone detector arrangement as claimed in claim 6, wherein said zero crossing detector means is a Schmitt trigger device.

8. A tone detector arrangement as claimed in claim 7, wherein said Schmitt trigger device's output is operatively coupled to a timer/counter means to measure the period of zero crossings detected in said Schmitt trigger device.

9. A tone detector arrangement as claimed in claim 8, wherein said timer/counter means output is operatively coupled to processor means which is arranged to compare a pattern of the periods measured by said timer/counter means with a pattern of predetermined values stored in an associated buffer means, said processor providing an indication when said pattern of periods coincide with said pattern of predetermined values.
